Europäisches Patentamt

European Patent Office

Office européen des brevets

(11) Veröffentlichungsnummer: **0 509 221 A2**

# EUROPÄISCHE PATENTANMELDUNG

(21) Anmeldenummer: **92103653.9**

(22) Anmeldetag: **03.03.92**

(51) Int. Cl.5: **B60K 17/14**

(30) Priorität: **18.04.91 DE 4112624**

(43) Veröffentlichungstag der Anmeldung:
**21.10.92 Patentblatt 92/43**

(84) Benannte Vertragsstaaten:
**CH DE ES FR GB IT LI NL SE**

(71) Anmelder: **MAN Nutzfahrzeuge
Aktiengesellschaft
Dachauer Strasse 667 Postfach 50 06 20
W-8000 München 50(DE)**

(72) Erfinder: **Rieck, Gerhard, Dipl.-Ing. (FH)
Fasanenstrasse 30
W-8000 München 60(DE)**
Erfinder: **Uttenthaler, Josef, Dipl.-Ing. (FH)
Aventinusstrasse 1
W-8068 Hettenshausen(DE)**

(54) Antriebsachse eines Strassenfahrzeuges.

(57) Die Erfindung betrifft die Antriebsachse eines Straßenfahrzeuges, insbesondere eines Nutzfahrzeuges, mit als Radnabenmotoren ausgebildeten E-Motoren, Außenplanetengetrieben, Bremsen, Scheibenrädern und Reifen. Zwischen der Antriebswelle (1) und dem E-Motor (5) ist ein Untersetzungsgetriebe 7 vorgesehen. Der E-Motor (5) ist exzentrisch zur Antriebswelle (1) angeordnet. Das Gehäuse (8) des Untersetzungsgetriebes (7) ist einenendes mit dem Achsstummel (4) und anderenendes mit dem E-Motor (5) fest verbunden, wobei der E-Motor (5) auf der Achsbrücke (9) befestigt ist.

FIG. 1

Die Erfindung bezieht sich auf eine Antriebsachse eines Straßenfahrzeuges, insbesondere eines Nutzfahrzeuges, mit als Radnabenmotoren ausgebildeten E-Motoren, Außenplanetengetrieben, Bremsen, Scheibenrädern und Reifen.

Bei Verwendung von elektrischen Radnabenmotoren waren bisher eine speziell angepaßte neue Bremse einschließlich Betätigungsorgane sowie ein zusätzliches zwischen Elektromotor und Antriebswelle angeordnetes Außenplanetengetriebe erforderlich. Außerdem war bei einer herkömmlichen Zwillingsbereifung der Einsatz eines elektrischen Radnabenmotores nicht möglich. Die Verwendung eines elektrischen Radnabenmotors erforderte auch eine sehr aufwendige Einzelradaufhängung, um den Mittelgangbereich z.B. eines Niederflurbusses entsprechend den Erfordernissen niedrig bauen zu können.

Der Erfindung liegt die Aufgabe zugrunde, einen elektromotorischen Antrieb für ein Fahrzeug, insbesondere Nutzfahrzeug, in der alternativen Ausstattung mit Zwillingsreifen unter Verwendung herkömmlicher Bauelemente, z.B. auch das Radnabengetriebe, mit einfachen Mitteln und platzsparend zu schaffen.

Dies wird erfindungsgemäß dadurch erreicht, daß zwischen Antriebswelle und E-Motor ein Untersetzungsgetriebe vorgesehen ist, daß der E-Motor exzentrisch zur Antriebswelle angeordnet ist, daß das Gehäuse des Untersetzungsgetriebes einenendes mit dem Achsstummel und anderenendes mit dem E-Motor fest verbunden ist und daß der E-Motor auf der Achsbrücke bzw. dem Luftfederträger befestigt ist. Indem der Elektromotor exzentrisch, d.h. sowohl höhen- wie auch seitenversetzt angeordnet wurde, konnte die Lage der Bremsnokkenwelle und der Bremsbetätigung beibehalten werden, so daß keine Einbuße an Bodenfreiheit hingenommen werden mußte. Ferner erlaubt die erfindungsgemäße Anordnung die Verwendung von herkömmlichen Achsbrücken bzw. Luftfederträgern bei gleichzeitiger Beibehaltung der Bodenfreiheit und der Erzielung einer wesentlich niedrigeren Mittelganghöhe bei Omnibussen, insbesondere Niederflurbussen. Die erfindungsspezifische Ausbildung gestattet auch den Anbau unterschiedlicher Elektromotore bei relativ geringen Anpassungsmodifizierungen. sentlich ist auch, daß die erfinderische Anordnung keine aufwendige Einzelradaufhängung erforderlich macht und somit sehr preiswert zu erstellen ist.

Nach einem Ausbildungsmerkmal der Erfindung ist das Gehäuse des Untersetzungsgetriebes mit dem Achsstummel einstückig verbunden.Solcherart wird kein zusätzliches Teil erforderlich und somit keine weitere Lagerhaltung.

Gemäß einer vorteilhaften Ausbildung der Erfindung ist das Gehäuse des Elektromotors oder des Untersetzungsgetriebes mit einem Flansch so ausgebildet, daß es den Längslenker der Achsführung aufnehmen kann. Auch dies trägt zur vereinfachten Lagerhaltung und somit zu Einsparungen bei.

Die Erfindung ist in einem Ausführungsbeipsiel dargestellt.

Es zeigen:

Fig. 1 eine Vorderansicht der Achsbrücke,

Fig. 2 eine Draufsicht der Achsbrücke,

Fig. 3 einen Querschnitt durch die Radnabe gemäß Schnitt A-B der Fig. 4, und

Fig. 4 den Radnabenantrieb im Längsschnitt.

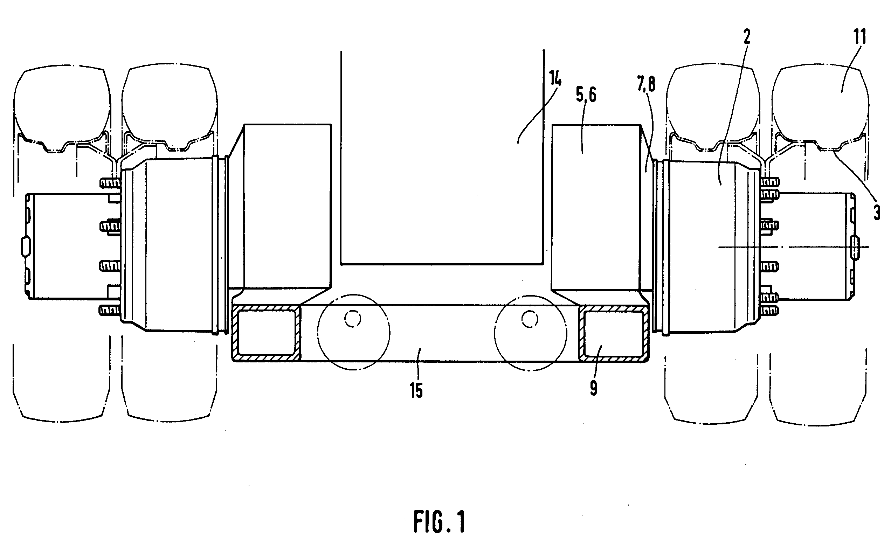

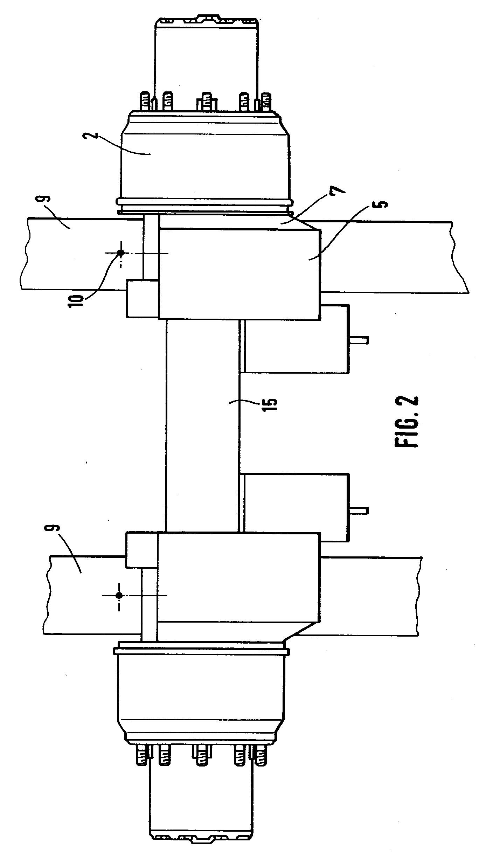

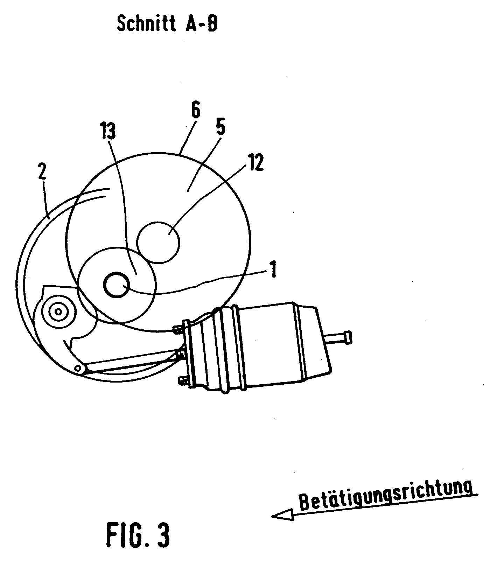

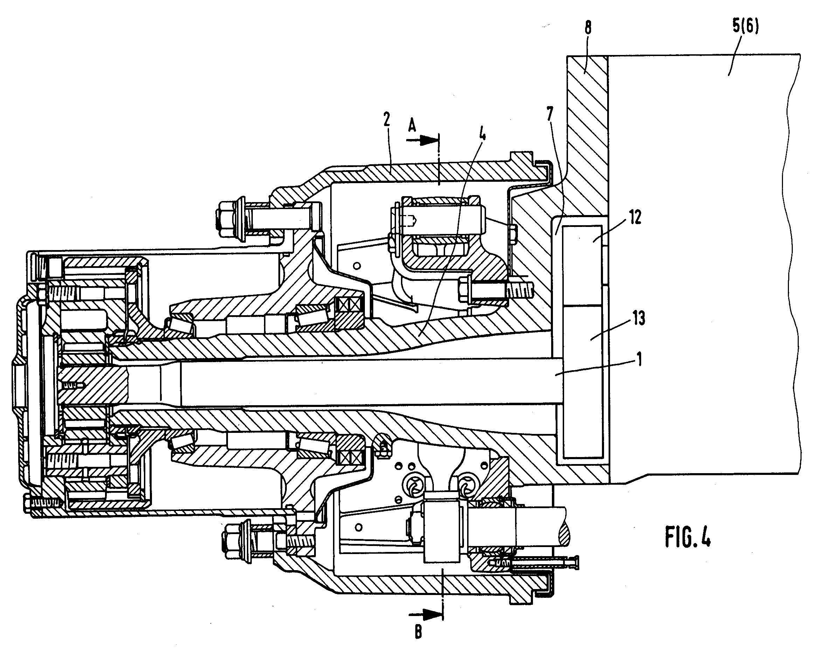

Die Figuren 1 bis 3 zeigen eine komplette Antriebsachse mit einer Zwillingsbereifung. Auf der Bremstrommel 2 sitzen die Felgen 3 mit den Reifen 11. Der Elektromotor 5 ist mit seinem Gehäuse 6 mit dem Gehäuse 8 des Untersetzungsgetriebes 7 verbunden, das wiederum, wie aus Fig. 4 ersichtlich ist, einstückig mit dem Achsstummel 4 verbunden ist. Der Elektromotor 5 ist auf der Achsbrücke bzw. Luftfederträger 9 befestigt. Die beiden Achsbrücken 9 sind durch ein Verbindungsteil 15 miteinander starr verbunden. Am Gehäuse 6 des E-Motors 5 oder am Gehäuse 8 des Untersetzungsgetriebes 7 sind wie aus Fig. 2 ersichtlich, Aufnahmen 10 für die Längslenker der Achsführung vorgesehen. Die spezielle Ausführung einer z.B. dafür vorzusehenden Auskragung ist hier nicht näher dargestellt. Fig. 3 zeigt die exzentrische Anordnung des Elektromotores 5 vor Bremstrommel 2, wobei die Verbindung von der Ausgangswelle Elektromotor zur Antriebswelle 1 über die Zahnräder 12, 13 erfolgt. Aus der Fig. 4, als Längsschnitt dargestellt, geht die Verbindung zwischen Elektromotor 5 und Antriebswelle 1 im Detail hervor, wobei insbesondere auf die einstückige Ausführung von Gehäuse 8 des Untersetzungsgetriebes 7 und Achsstummel 4 aufmerksam gemacht werden soll.

Bezugszeichenliste

| | |
|---|---|
| 1 | Antriebswelle |
| 2 | Radnabe |
| 3 | Felge |
| 4 | Achsstummel |
| 5 | E-Motor |
| 6 | Gehäuse von E-Motor |
| 7 | Untersetzungsgetriebe |
| 8 | Gehäuse von Untersetzungsgetriebe |
| 9 | Achsbrücke bzw. Luftfederträger |
| 10 | Aufnahme für Längslenker |
| 11 | Reifen |
| 12 | Zahnrad |
| 13 | Zahnrad |
| 14 | Mittelgang |
| 15 | Verbindungsteil zwischen den Achsbrücken 9 |

**Patentansprüche**

1. Antriebsachse eines Straßenfahrzeuges, insbesondere eines Nutzfahrzeuges, mit als Radnabenmotoren ausgebildeten E-Motoren, Außenplanetengetrieben, Bremsen, Scheibenrädern und Reifen, dadurch gekennzeichnet,
   - daß zwischen der Antriebswelle (1) und dem E-Motor (5) ein Untersetzungsgetriebe (7) vorgesehen ist,
   - daß der E-Motor (5) exzentrisch zur Antriebswelle (1) angeordnet ist,
   - daß das Gehäuse (8) des Untersetzungsgetriebes (7) einenendes mit dem Achsstummel (4) und anderenendes mit dem E-Motor (5) fest verbunden ist und
   - daß der E-Motor (5) auf der Achsbrücke (9) befestigt ist.

2. Antriebsachse nach Anspruch 1, dadurch gekennzeichnet, daß das Gehäuse (8) des Untersetzungsgetriebes (7) mit dem Achsstummel (4) einstückig verbunden ist.

3. Antriebsachse nach Anspruch 1 oder 2, dadurch gekennzeichnet, daß das Untersetzungsgetriebe (7) mit den Zahnrädern (12, 13) einstufig ausgebildet ist.

4. Antriebsachse nach den Ansprüchen 1 bis 3, dadurch gekennzeichnet, daß am Gehäuse (6, 8) des E-Motors (5) oder des Untersetzungsgetriebes (7) eine Aufnahme (10) für die Längslenker der Achsführung vorgesehen ist.

FIG. 1

FIG. 2

EP 0 509 221 A2

Schnitt A-B

Betätigungsrichtung

FIG. 3

FIG.4